# EUROPÄISCHE PATENTSCHRIFT

(11) **EP 1 155 914 B1**
(45) Veröffentlichungstag und Bekanntmachung des Hinweises auf die Patenterteilung: **03.08.2005**
(21) Anmeldenummer: 01112134.0
(22) Anmeldetag: 17.05.2001
(51) Int. Cl.: B60R 9/04

(54) **Fahrzeug- Dachrelingbefestigungsvorrichtung**
Vehicle roof rail mounting
Montage de rails de toit pour véhicules

(30) Priorität: 17.05.2000 DE 10024245; 04.08.2000 DE 10038123
(43) Veröffentlichungstag der Anmeldung: 21.11.2001
(73) Patentinhaber: DURA Automotive Plettenberg Entwicklungs- und Vertriebs GmbH, 58840 Plettenberg (DE)
(72) Erfinder: Stühn, Rüdiger, 59425 Unna (DE); Stuff, Joachim, 57482 Wenden (DE)
(74) Vertreter: Zinnecker, Armin, Dipl.-Ing.

(56) Entgegenhaltungen:
- EP-A- 0 596 306
- DE-A- 19 732 288
- DE-A- 19 936 323
- DE-C- 3 153 106
- FR-A- 2 657 055
- FR-A- 2 687 964

## Beschreibung

Die vorliegende Erfindung betrifft eine Befestigungsvorrichtung für eine Reling an einem Dachkanal von Kraftfahrzeugdächern, mit einer Mehrzahl von Befestigungsmitteln zur Befestigung der Reling an mehreren Punkten sowie einer einstückigen Dachleiste zur Abdeckung des Dachkanals, wobei die Dachleiste Aussparungen aufweist, durch die hindurch die Reling mittels der Befestigungsmittel an einer Wandung des Dachkanals verankert ist.

Eine herkömliche Befestigungsvorrichtung ist aus der DE 36 26 926 C2 bekannt. Um die bei mehrstückig ausgebildeten Dachleisten umständliche Montage zu vereinfachen und die aufwendigen Verbindungen zwischen den Dachleistenstücken zu vermeiden, zeichnen sich derartige Relinganordnungen dadurch aus, daß die Dachleiste einstückig ist und sich über die gesamte Länge des abzudeckenden Dachkanals erstreckt. Andererseits muß die Befestigung der Reling massiv gestaltet sein, um die bei großen Dachlasten auftretenden hohen Kräfte auf die Reling abzufangen. Bei der DE 36 26 926 C2 ist hierzu vorgesehen, die Dachleiste mittels mehrerer Bolzen massiv mit der Karosserie im Dachkanalbereich zu verschrauben. Die Reling selbst ist integral einstückig an die Dachleiste angeformt oder ebenfalls mittels einer Vielzahl von Schrauben an dieser befestigt, um die notwendige Festigkeit der Verbindung zu erreichen. Diese bekannte Vorrichtung ist jedoch in mehrerer Hinsicht verbesserungsfähig. So ist sie z.B. aufgrund der massiven Bauweise unbefriedigend hinsichtlich des Gewichts des Relingverbaus. Darüber hinaus ist die Fertigung dieser Relingbefestigung relativ kostenintensiv.

Eine Befestigungsvorrichtung für eine Dachreling der eingangs genannten Art ist aus der DE 197 32 288 bekannt. Die im Ausblasverfahren gefertigte Kunststoffreling soll mit Stützfüßen durch die Dachleiste hindurchgeschraubt werden. Hierbei kann es zu Verformungen der Dachleiste kommen.

Der vorliegenden Erfindung liegt daher die Aufgabe zugrunde, eine verbesserte Vorrichtung der eingangs genannten Art zu schaffen, die den Stand der Technik in vorteilhafter Weise weiterbildet. Insbesondere soll eine einfach und kostengünstig herzustellende und zu montierende Relingbefestigung geschaffen werden, die einerseits leicht ist und andererseits die notwendige Stabilität besitzt und Verformungen der Dachleiste durch das Anziehen der Reling vermeidet.

Erfindungsgemäß wird diese Aufgabe durch eine Vorrichtung gemäß Patentanspruch 1 gelöst. Vorteilhafte Ausgestaltungen der Erfindung sind Gegenstand der Unteransprüche.

Die über die gesamte abzudeckende Länge des Dachkanals einstückig ausgebildete Dachleiste besitzt also Aussparungen, durch die hindurch die Reling mittels der Befestigungsmittel an einer Wandung des Dachkanals verankert ist. Die Reling ist also nicht an der Dachleiste angeschraubt bzw. angeformt, sondern unmittelbar an dem Dachkanal selbst befestigt. Die auf die Reling wirkenden Kräfte werden durch die Erstreckung der Befestigungsmittel durch die Dachleiste hindurch nicht in letztere eingeleitet, die Verankerung der Reling ist separat von der Dachleiste vorgesehen. Hierdurch braucht keine massive Befestigung der Dachleiste vorgesehen werden, die Dachleiste selbst kann dünn und leichtgewichtig ausgebildet sein. Hierdurch kann eine beträchtliche Gewichtsersparnis erzielt werden. Durch die einstückige Ausbildung der Dachleiste über die gesamte Länge des Dachkanals brauchen keine Dachleistenstücke miteinander bzw. mit Reling-Tragstückkonsolen zusammengesteckt werden, ein Verschrauben der Dachreling mit der Dachleiste entfällt. Hierdurch vereinfacht sich die Montage der Dachreling wesentlich. Es besteht die Möglichkeit, die Dachleiste in Wagenfarbe und die Reling mit anderer Oberfläche (z.B. schwarz oder chrom) zu montieren. Durch die gegenüber mehrstückigen Dachleisten geringere Teilezahl vereinfacht sich die Logistik bei der Herstellung sowie die Verpackung, zum anderen ist durch die vereinfachte Montage sichergestellt, daß die Dachleiste nicht verkratzt oder sonstwie beschädigt wird. Ein gegebenenfalls notwendiges Nachlackieren und daraus resultierende Farbabweichungen entfallen.

Die Befestigung der Dachleiste ist von den Befestigungsmitteln für die Reling entkoppelt und sind von den Befestigungsmitteln für die Reling separate Befestigungsmittel für die Dachleiste vorgesehen, mit denen diese an dem Dachkanal befestigbar ist. Hierdurch wird verhindert, daß die Dachreling z.B. durch kräftiges Anziehen der Befestigungsmittel für die Reling oder durch Einleitung der auf die Reling wirkenden Kräfte verformt wird, auch wenn die Dachleiste nur leichtgewichtig und dünn ausgebildet ist. Die Befestigungsmittel für die Dachleiste können verschieden ausgebildet sein. Die Dachleiste kann kraftschlüssig geklemmt werden. Gemäß einer bevorzugten Ausführung der Erfindung wird die Dachleiste formschlüssig verrastet.

Insbesondere ist in dem Dachkanal unter der Dachleiste ein Keder vorgesehen, an dem die Dachleiste befestigt wird. Die Dachleiste und/oder der Keder können Rastzungen besitzen, mittels derer die Dachleiste durch Aufdrücken auf den Keder verrastet werden kann.

Der Keder ist mehrstückig ausgebildet, so daß die Reling unmittelbar an dem Dachkanal verankert werden kann. Der Keder kann gegebenenfalls auch im Bereich der Befestigungsmittel für die Reling entsprechende Aussparungen besitzen, durch die hindurch die Befestigungsmittel für die Reling an der Wandung des Dachkanals befestigt werden können. In vorteilhafter Weise ist die Dachleiste unabhängig von der Reling vormontierbar, die Reling ist separat von der Dachleiste demontierbar.

In vorteilhafter Weise ist die Reling über Rastböcke im Dachkanal verankert, die die Reling am Boden des Dachkanals kippstabil abstützen. Die Zugkraft der Befestigungsmittel wird über die Rastböcke auf den Boden des Dachkanales gegeben. Vorzugsweise sind die Rastböcke von der Reling separat ausgebildet und werden von den Befestigungsmitteln zwischen dem Dachkanal und der Reling eingespannt.

Die Rastböcke können mit einer Abstützfläche unter der Dachleiste liegen, so daß sie auch die Dachleiste abstützen. Andererseits treten die Rastböcke durch die Aussparungen der Dachleiste hindurch und besitzen eine Höhe, die größer ist als der Abstand der Oberseite der Oberseite der Dachleiste vom Boden des Dachkanals. Sie können mit ihrer Abstützfläche, gegen die die Reling gespannt wird, leicht über die Dachleiste überstehen. Hierdurch ist sichergestellt, daß die Reling nicht gegen die Dachleiste gespannt wird und auf die Reling wirkende Haltekräfte auf die Dachleiste eingeleitet werden. Vorzugsweise berühren die Rastböcke und die Dachleiste einander nicht.

Die Aussparungen in der Dachleiste sind dabei größer ausgebildet als der Querschnitt der durch sie hindurchtretenden Rastböcke, so daß die Rastböcke mit Spiel in den Aussparungen sitzen und Fertigungstoleranzen ausgeglichen werden können.

Vorzugsweise besitzen die Rastböcke Durchgangsausnehmungen, durch die die Befestigungsmittel für die Reling hindurchtreten können. Als Befestigungsmittel sind vorzugsweise Schraubverbindungen vorgesehen, die einerseits mit der Reling und andererseits mit dem Boden des Dachkanals verbindbar sind. Hierdurch kann die Reling massiv gegen den Boden des Dachkanals bzw. gegen die entsprechende Abstützfläche der Rastböcke gespannt werden. Im Dachkanalboden können entsprechende Löcher vorgesehen sein, durch die Schraubenbolzen gesteckt und mittels Muttern gegengeschraubt werden können.

Um den Dachkanal abzudecken, kann der Keder, an dem die Dachleiste befestigt ist, vorzugsweise integral angeformte Kederlippen aufweisen, die formschlüssig zwischen die Dachleiste und den Dachkanal gefügt werden. Hierdurch zentrieren die Kederlippen die Dachleiste. Darüber hinaus können sie eine Sicherung für die Dachleiste gegen unbeabsichtigtes Lösen bilden. Sie können an dem Abschnitt der Dachleiste angreifen, der mit dem Keder verrastet wird, so daß die Verrastung zwischen Dachleiste und Keder gesichert wird.

Der Keder kann integral einstückig aus unterschiedlichen Materialien geformt sein. In vorteilhafter Weise ist ein zentraler Kederkorpus, an dem die Dachleiste befestigt ist, aus einem härteren Material gebildet als die Kederlippen. Hierdurch erfolgt eine bestmögliche Anpassung der Kederabschnitte an ihre jeweilige Funktion.

Im Bereich der Befestigungsmittel für die Reling ist kein Keder vorgesehen.

Die Erfindung wird nachfolgend anhand eines bevorzugten Ausführungsbeispieles und zugehöriger Zeichnungen näher erläutert. In diesen zeigen:
- Fig. 1: eine perspektivische Ansicht des Relingverbaus gemäß einer bevorzugten Ausführung der Erfindung in einer Explosionsdarstellung, die die Reling, die Dachleiste, den Keder und Rastböcke für die Befestigung der Reling zeigt,

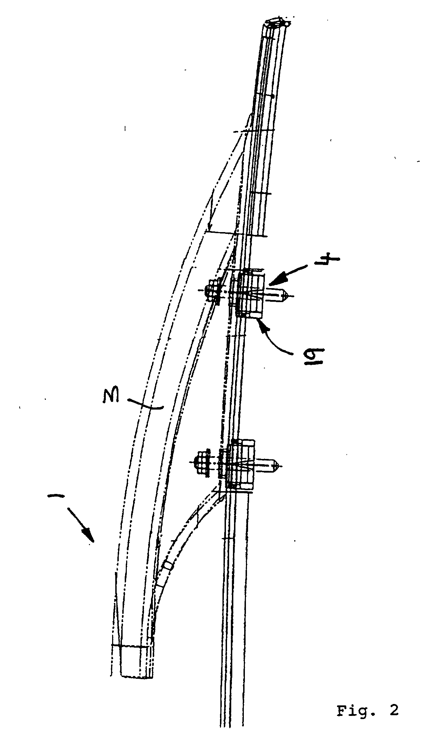

- Fig. 2: eine ausschnittsweise Darstellung der Befestigung einer rückwärtigen Relingsäule der Reling aus Fig. 1 in montiertem Zustand,
- Fig. 3: eine Schnittansicht quer zur Längsrichtung des Dachkanales einer Schraubverbindung zwischen Reling und Dachkanalboden mit einem Rastbock durch die Dachleiste hindurch gemäß einer bevorzugten Ausführung der Erfindung,
- Fig. 4: eine Schnittansicht der Schraubverbindung aus Fig. 3 in Längsrichtung des Dachkanals, und
- Fig. 5: eine Schnittansicht quer zur Längsrichtung des Dachkanals, des darin angeordneten Keders und der daran befestigten Dachleiste gemäß einer bevorzugten Ausführung der Erfindung, wobei Kederlippen in ihrer unmontierten, entspannten Stellung gezeichnet sind.

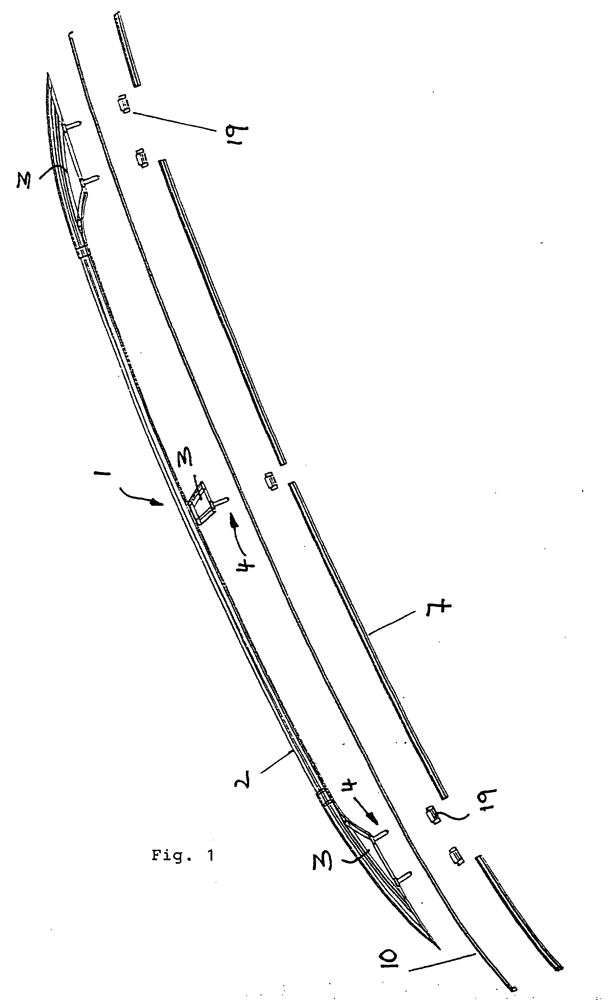

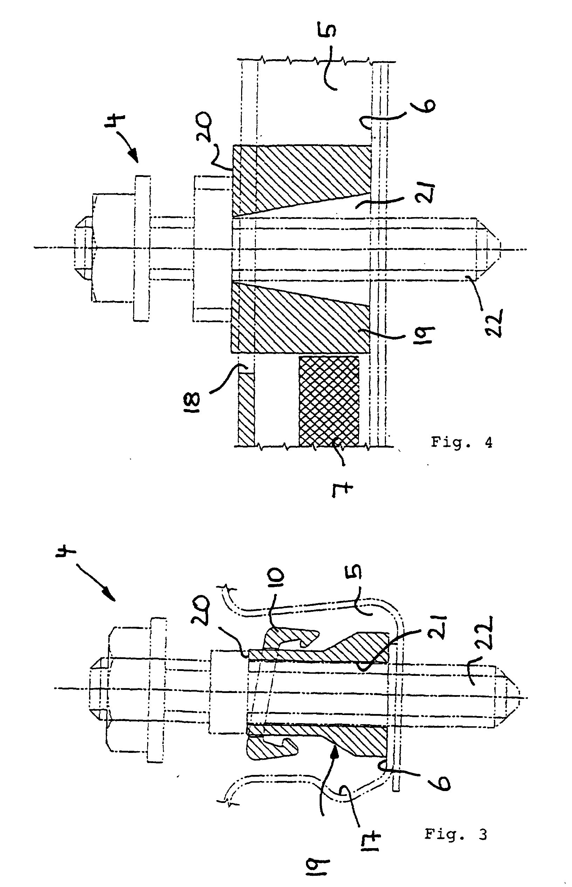

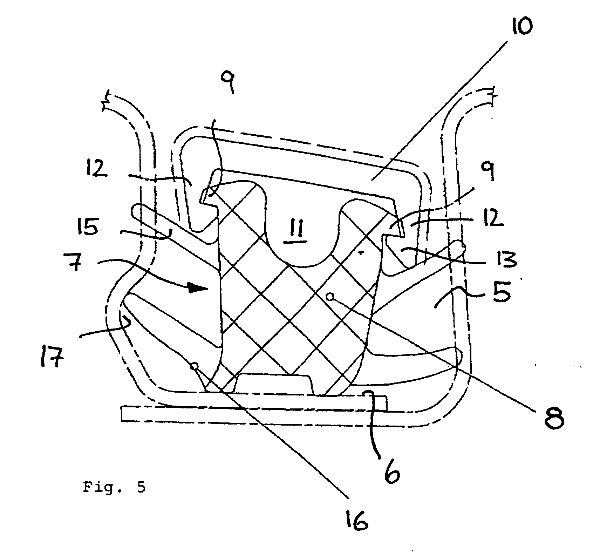

Die in Fig. 1 gezeigte Reling 1 umfaßt einen Relingholm 2, der an seinen beiden Enden sowie etwa mittig jeweils durch eine Relingsäule 3 abgestützt und getragen wird. Die Relingsäulen 3 sind mittels Schraubverbindungen 4 unmittelbar im Boden eines Dachkanales 5 verankert, der im Randbereich eines Kraftfahrzeugdaches vorgesehen ist. Der im Querschnitt im wesentlichen rechteckige Dachkanal 5 wird, wie die Figuren 3 und 5 zeigen, von Dach- und Seitenwandblechen begrenzt, die im Bodenbereich des Dachkanals 5 miteinander verschweißt sind. Der Boden 6 des Dachkanals 5 ist im wesentlichen eben.

In den Dachkanal 5 ist ein Keder 7 eingesetzt, der mehrstückig ausgebildet ist. Wie Fig. 1 zeigt, umfaßt der Keder 7 mehrere Teile, die sich zwischen den Schraubverbindungen 4 der Reling 1 in dem Dachkanal 5 erstrecken. Im Bereich der Schraubverbindungen 4 ist also kein Keder im Dachkanal 5 vorgesehen.

Der Keder umfaßt einen zentralen Kederkorpus 8 (vgl. Fig. 5), der am Boden 6 des Dachkanals 5 aufsteht und an seinem zur lichten Seite des Dachkanals 5 hin gewandten Ende formschlüssig und kraftschlüssig wirkende Befestigungsmittel zur Befestigung der Dachleiste 10 besitzt. Insbesondere besitzt der Keder 7 an seinem dem Boden 6 des Dachkanals 5 abgewandten Ende zwei zu den Seitenwänden des Dachkanals 5 hin vorspringende Rastzungen 9, die sich jeweils als stegförmiger Vorsprung in Längsrichtung des Keders 7 bzw. des Dachkanals 5 erstrecken. Zwischen den Rastzungen 9 besitzt der Keder 7 eine Federaussparung 11, die ein Zusammendrücken der Rastzungen 9 aufeinander zu erlaubt.

Die Dachleiste 10, die im wesentlichen einen u-förmigen Querschnitt aufweist, besitzt an seinen parallelen Schenkeln 12 nach innen vorspringende Rastzungen 13, die zu den Rastzungen 9 des Keders 7 komplementär ausgebildet sind. Die Dachleiste 10 kann an dem Keder 7 befestigt werden, indem sie auf diesen aufgedrückt wird, so daß die Rastzungen 9 des Keders mit den Rastzungen 13 der Dachleiste 10 in Eingriff gelangen und die Dachleiste 10 auf dem Keder 7 verriegeln (vgl. Fig. 5).

Die Breite der Dachleiste 10 ist schmäler als die Breite des Dachkanals 5, so daß zwischen den Schenkeln 12 der Dachleiste 10 und den Seitenwandungen des Dachkanales 5 jeweils ein Spalt ist. Um den Spalt abzudecken, sind an den Kederkorpus 8 integral einstückig Kederlippen 15 angeformt, die im entspannten, d.h. nicht in den Dachkanal 5 gefügten Zustand des Keders 7 vom-zentralen Kederkorpus 8 flügelartig abstehen. Wird der Keder 7 in den Dachkanal 5 eingesetzt, schmiegen sich die Kederlippen 15 an die Seitenwandungen des Dachkanals 5. Die Kederlippen 15 decken zum einen den Spalt zwischen der Dachleiste 10 und dem Dachkanal 5 ab, zum anderen zentrieren sie die Dachleiste 10.

Wie Fig. 5 zeigt, besitzt der Keder ein zweites Paar Kederlippen 16, die vom zentralen Kederkorpus 8 unterhalb der ersten Kederlippen 15, d.h. näher zum Boden 6 des Dachkanals 5 hin, im wesentlichen von einem Fußbereich des zentralen Kederkorpus 8 aus seitlich vorspringen. Sie schmiegen sich ebenfalls an die Seitenwände des Dachkanales 5 an und dichten diesen zum Boden hin ab (vgl. Fig. 5). Der Dachkanal 5 besitzt eine Hinterschneidung 17, in der sich eine der zweiten Kederlippen 16 verspreitzt, so daß der Keder 7 im Dachkanal 5 gehalten ist.

Der Keder 7 ist einschließlich seines zentralen Korpus 8 sowie der Kederlippen 15 und 16 integral einstückig geformt, insbesondere kann er aus Polyvinylchlorid bestehen. Die Kederlippen besitzen jedoch eine geringere Härte als der Kederkorpus.

Um die Relingsäulen 3 unmittelbar am Boden 6 des Dachkanals 5 verankern zu können, sind in der Dachleiste 10 im Bereich der Schraubverbindungen 4 Aussparungen 18 vorgesehen, durch die die Schraubverbindungen 4 hindurchgreifen können. Zur Abstützung der Relingsäulen 3 sind jeder Schraubverbindung 4 Rastböcke 19 zugeordnet, die einerseits auf dem ebenen Boden 6 des Dachkanals 5 aufliegen und an ihrem gegenüberliegenden Ende Abstützflächen 20 besitzen, auf denen die Relingsäulen 3 aufliegen können. Wie die Figuren 3 und 4 zeigen, treten die Rastböcke 19 durch die Dachleiste 10 hindurch, d.h. ihre Höhe ist größer als der Abstand der Oberseite der Dachleiste 10 vom Boden 6 des Dachkanals 5. Die Auflagefläche 20 der Rastböcke 19 liegt bei der gezeichneten Ausführungsform oberhalb der Oberseite der Dachleiste 10.

Die Rastböcke 19 besitzen eine zentrale Durchgangsausnehmung 21, durch die hindurch sich die Schraubverbindung 4 erstreckt. Die Durchgangsausnehmung 21 erstreckt sich zentral und die Abstützflächen des Rastbockes 19 erstrecken sich um die Durchgangsausnehmung herum, so daß der jeweilige Rastbock satt und kippstabil gegen den Boden der Dachkanalausnehmung 5 gezogen wird. Die Durchgangsausnehmung 21 erweitert sich in Längsrichtung des Dachkanales 5 zur Bodenseite desselben in ihrem Querschnitt (vgl. Fig. 4), während sie quer zur Längsrichtung des Dachkanales gerade Flanken, d.h. einen gleichbleibenden Querschnitt besitzt (vgl. Fig. 3).

Wie die Figuren 3 und 4 zeigen, ist die Aussparung 18 in der Dachleiste 10 größer als der Querschnitt des jeweiligen Rastbockes 19, so daß der Rastbock 19 mit Spiel durch die Aussparung 18 hindurchtreten kann. Hierdurch wird ein Verspannen bzw. eine Krafteinleitung auf die Dachleiste 10 vermieden.

Der Schraubbolzen 22 einer jeden Schraubverbindung 4 tritt durch den Boden 6 des Dachkanals 5 hindurch. Er kann mit einer entsprechenden Mutter gegengeschraubt oder gegebenenfalls auch in eine dem Boden zugeordnete Schraubhülse eingeschraubt werden. Hierdurch wird gewährleistet, daß alle auftretenden Kräfte gezielt in den Boden des Dachkanals geleitet werden.

## Patentansprüche

1. Befestigungsvorrichtung für eine Reling an einem Dachkanal von Kraftfahrzeugdächern, mit einer Mehrzahl von Befestigungsmitteln (4) zur Befestigung der Reling (1) an mehreren Punkten sowie einer einstückigen Dachleiste (10) zur Abdeckung des Dachkanales, wobei die Dachleiste (10) Aussparungen (18) aufweist, durch die hindurch die Reling (1) mittels der Befestigungsmittel (4) an einer Wandung (6) des Dachkanals (5) verankerbar ist, **dadurch gekennzeichnet, dass** die Befestigungsvorrichtung separate Rastböcke (19) aufweist, auf die die Reling abstützbar ist, die jeweils im Bereich der Aussparungen (18) der Dachleiste (10) vorgesehen sind, am Boden (6) des Dachkanals (5) aufliegen und durch die Aussparungen (18) in der Dachleiste (10) hindurchtreten, wobei die Dachleiste (10) zu den hindurchtretenden Rastböcken (19) Spiel hat und mittels eigener Befestigungsmittel (9, 13) an einem in dem Dachkanal (5) unter der Dachleiste (10) einsetzbaren Keder (7) befestigt ist, der mehrere Teile umfasst, die sich zwischen den Rastböcken (19) erstrecken.

2. Vorrichtung nach dem vorhergehenden Anspruch, wobei die Dachleiste einen u-förmigen Querschnitt mit seitlichen Schenkeln (12), an denen nach innen vorspringende Rastzungen (13) vorgesehen sind, aufweist und mit komplementären Rastzungen (9) am Keder (7) formschlüssig verrastet ist.

3. Vorrichtung nach einem der vorhergehenden Ansprüche, wobei der Keder (7) einen zentralen Kederkorpus (8) mit daran integral angeformten, flügelartig abstehenden Kederlippen (15, 16) besitzt, wobei der Kederkorpus (8) aus einem härteren Material als die Kederlippen (15, 16) gebildet ist.

4. Vorrichtung nach einem der vorhergehenden Ansprüche, wobei der Dachkanal eine Hinterschneidung (17) aufweist, in der der Keder (7) verspreizt ist.

5. Vorrichtung nach dem vorhergehenden Anspruch, wobei die Rastböcke (19) Durchgangsausnehmungen (21) zum Durchtritt der Befestigungsmittel (4) aufweisen.

6. Vorrichtung nach einem der vorhergehenden Ansprüche, wobei die Rastböcke (19) jeweils eine oberhalb der Oberseite der Dachleiste (10) liegende Auflagefläche (20) für die Reling (1) besitzen.

7. Vorrichtung nach einem der vorhergehenden Ansprüche, wobei als Befestigungsmittel Schraubverbindungen (4) vorgesehen sind, die einerseits mit der Reling (1) und andererseits mit dem Boden (6) des Dachkanals (5) verbindbar sind.

8. Vorrichtung nach einem der vorhergehenden Ansprüche, wobei zwischen die Dachleiste (10) und den Dachkanal (5) eine Spaltabdeckung geschaltet ist, vorzugsweise Kederlippen (15) formschlüssig dazwischengefügt sind.

9. Vorrichtung nach einem der vorhergehenden Ansprüche, wobei im Bereich der Aussparungen (18) der Dachleiste (10) die Reling (1) den Dachkanal (5) überdeckt.

## Claims

1. Device for mounting a rail on a roof channel of motor vehicle roofs, having a plurality of mounting means (4) for mounting the rail (1) at a plurality of points, and having a single-piece roof strip moulding (10) for covering the roof channel, the roof drip moulding (10) having cutouts (18) through which the rail (1) can be secured on a wall (6) of the roof channel (5) by means of the mounting means (4), **characterized in that** the mounting device has separate latching lugs (19) on which the rail can be supported, the said latching lugs being provided in each case in the region of the cutouts (18) of the roof drip moulding (10), and resting on the bottom (6) of the roof channel (5) and passing through the cutouts (18) in the roof drip moulding (10), the roof drip moulding (10) having play with respect to the latching lugs (19) passing through it and being mounted by means of dedicated mounting means (9, 13) on a weatherstrip (7) which can be inserted in the roof channel (5) under the roof drip moulding (10) and comprises a plurality of parts which extend between the latching lugs (19).

2. Device according to the preceding claim, the roof drip moulding having a U-shaped cross section with lateral limbs (12), on which inwardly projecting latching tongues (13) are provided, and being latched in a form-fitting manner on the weatherstrip (7) by means of complementary latching tongues (9).

3. Device according to one of the preceding claims, the weatherstrip (7) having a central weatherstrip body (8) with weatherstrip lips (15, 16), which are integrally formed on it and protrude in the manner of wings, the weatherstrip body (8) being formed from a harder material than the weatherstrip lips (15, 16).

4. Device according to one of the preceding claims, the roof channel having an undercut (17) in which the weatherstrip (7) is braced.

5. Device according to the preceding claim, the latching lugs (19) having apertures (21) for the passage of the mounting means (4).

6. Device according to one of the preceding claims, the latching lugs (19) each having a supporting surface (20), which is situated above the upper side of the roof drip moulding (10), for the rail (1).

7. Device according to one of the preceding claims, screw connections (4) being provided as the mounting means, which connections can be connected, on the one hand, to the rail (1) and, on the other hand, to the bottom (6) of the roof channel (5).

8. Device according to one of the preceding claims, a gap covering being connected between the roof drip moulding (10) and the roof channel (5), preferably weatherstrip lips (15) being fitted in a form-fitting manner inbetween.

9. Device according to one of the preceding claims, the rail (1) covering the roof channel (5) in the region of the cutouts (18) of the roof drip moulding (10).

## Revendications

1. Dispositif de fixation pour un rail à un canal de toit d'un véhicule automobile, avec plusieurs moyens de fixation (4) pour fixer le rail (1) à plusieurs points ainsi qu'une baguette de toit en une pièce (10) pour couvrir le canal de toit, où la baguette de toit (10) présente des évidements (18) à travers lesquels le rail (1) peut être ancré par les moyens de fixation (4) à une paroi (6) du canal de toit (5), **caractérisé en ce que** le dispositif de fixation présente des pattes d'enclenchement séparées (19), sur lesquelles le rail peut s'appuyer, qui sont prévues à chaque fois dans la zone des évidements (18) de la baguette de toit (10), qui reposent sur le fond (6) du canal de toit (5) et passent à travers les évidements (18) dans la baguette de toit (10), où la baguette de toit (10) présente un jeu relativement aux pattes d'enclenchement traversantes (19) et est fixée par des moyens de fixation propres (9, 13) à un bourrelet (7) insérable dans le canal de toit (5) sous la baguette de toit (10), qui comprend plusieurs parties, qui s'étendent entre les pattes d'enclenchement (19).

2. Dispositif selon la revendication précédente, où la baguette de toit présente une section transversale en forme de u avec des branches latérales (12), auxquelles sont prévues des languettes d'enclenchement (13) faisant saillie vers l'intérieur, et est enclenchée par concordance des formes avec des languettes d'enclenchement complémentaires (9) au bourrelet (7).

3. Dispositif selon l'une des revendications précédentes, où le bourrelet (7) possède un corps de bourrelet central (8) avec des lèvres de bourrelet (15, 16) rapportées intégralement par formage à celui-ci, faisant saillie en forme d'ailette, où le corps (8) du bourrelet est réalisé en un matériau plus dur que les lèvres du bourrelet (15, 16).

4. Dispositif selon l'une des revendications précédentes, où le canal de toit présente une contre-dépouille (17) dans laquelle s'est engagé le bourrelet (7).

5. Dispositif selon la revendication précédente, où les pattes d'enclenchement (19) présentent des évidements traversants (21) pour le passage des moyens de fixation (4).

6. Dispositif selon l'une des revendications précédentes, où les pattes d'enclenchement (19) possèdent une face d'appui (20) pour le rail (1) située à chaque fois au-dessus du côté supérieur de la baguette de toit (10).

7. Dispositif selon l'une des revendications précédentes, où des vissages (4) sont prévus comme moyens de fixation, qui peuvent être reliés, d'une part, au rail (1) et, d'autre part, au fond (6) du canal de toit (5).

8. Dispositif selon l'une des revendications précédentes, où est inséré entre la baguette de toit (10) et le canal de toit (5) un recouvrement de fente, de préférence des lèvres de bourrelet (15) y sont insérées par concordance des formes.

9. Dispositif selon l'une des revendications précédentes, où au voisinage des évidements (18) de la baguette de toit (10), le rail (1) recouvre le canal de toit (5).
